# EUROPEAN PATENT APPLICATION

(11) **EP 4 668 926 A1**
(43) Date of publication of application: **24.12.2025**
(21) Application number: 23921710.2
(22) Date of filing: 14.02.2023
(51) Int. Cl.: H04W 72/04

(54) **RESOURCE DETERMINATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/076008
(87) International publication number: WO 2024/168542

(57) **Abstract**

Provided in the embodiments of the present disclosure is a resource determination method. The method is executed by a first UE for sidelink (SL) communication, and comprises: in response to receiving shared channel occupancy time (COT) indication information sent by a shared-COT initiating UE, determining whether a first UE is a target UE of the shared COT; and in response to determining that the first UE is the target UE of the shared COT, determining, on the basis of the shared COT indication information, a transmission resource for executing SL transmission. In this way, after a UE receives shared COT indication information sent by a shared-COT initiating UE, when it is determined that a first UE is a target UE of the shared COT, the UE may determine, on the basis of the shared COT indication information, a transmission resource for executing SL transmission. Compared with the method of randomly determining a transmission resource for executing SL transmission, preferentially selecting a resource within a time-domain range indicated by the shared COT can improve the reliability of SL data transmission due to the fact that the first UE can use type 2 LBT in the shared COT, thereby improving the success rate of LBT.

## Description

### TECHNICAL FIELD

This application relates to, but is not limited to, the field of wireless communication technologies, and in particular to a resource determination method and apparatus, a communication device and a storage medium.

### BACKGROUND

In wireless communication technologies, to support direct communication between terminals, a sidelink (SL) communication mode is introduced, with an interface between terminals being PC-5. Channel occupancy time (COT) sharing allows terminal devices to share a preempted COT with another terminal device for use, but certain requirements are imposed on the terminal device eligible for the COT sharing. A user equipment initiating the COT sharing is referred to as a COT initiating UE, while a user equipment utilizing the shared COT is referred to as a responding UE. In the related technologies, in the communication scenario where the R18 SL operates in an unlicensed spectrum, if a terminal operates in Mode 2 (i.e., autonomous resource selection mode) and receives shared COT indication information, how to determine an SL transmission resource upon triggering a resource selection or a resource reselection is an issue that requires consideration.

### SUMMARY

Embodiments of the present disclosure disclose a resource determination method and apparatus, a communication device and a storage medium.

According to a first aspect, embodiments of the present disclosure provide a resource determining method. The method is executed by a first terminal in a sidelink (SL) communication, and includes:
determining whether the first terminal is a target terminal for a shared channel occupancy time (COT), in response to receiving shared COT indication information transmitted by an initiating terminal for the shared COT; and
determining a transmission resource for performing an SL transmission based on the shared COT indication information, in response to determining that the first terminal is the target terminal for the shared COT.

In an embodiment, the determining the transmission resource for performing the SL transmission based on the shared COT indication information includes:
determining the transmission resource for performing the SL transmission based on the shared COT indication information, in response to the first terminal triggering a resource selection or a resource reselection.

In an embodiment, the shared COT indication information indicates at least one of:
a starting symbol, a starting slot, a starting subframe, or a starting frame of the shared COT;
an ending symbol, an ending slot, an ending subframe, or an ending frame of the shared COT;
a duration of the shared COT;
a starting symbol, a starting slot, a starting subframe, or a starting frame of a remaining COT of the shared COT;
an ending symbol, an ending slot, an ending subframe, or an ending frame of a remaining COT of the shared COT;
a remaining duration of the shared COT;
identification information of the initiating terminal for the shared COT;
identification information of the target terminal for the shared COT; or
channel access priority class (CAPC) information of the shared COT.

In an embodiment, the determining whether the first terminal is the target terminal for the shared COT includes:
determining whether the first terminal is the target terminal for the shared COT based on a destination address and a service type of a data packet carrying the shared COT indication information, where the service type is a service type indicated by an SCI carrying the shared COT indication information.

In an embodiment, the determining whether the first terminal is the target terminal for the shared COT based on the destination address and the service type of the data packet carrying the shared COT indication information includes:
determining that the first terminal is the target terminal for the shared COT, in response to that the service type is a unicast service, and the destination address indicated by the sidelink control information (SCI) carrying the shared COT indication information is a Layer-2 address of the first terminal; or
determining that the first terminal is the target terminal for the shared COT, in response to that the service type is a multicast service, the destination address indicated by the SCI carrying the shared COT indication information is a Layer-2 address associated with the multicast service, and an identifier of the target terminal indicated by the shared COT indication information is the same as a terminal identifier of the first terminal; or
determining that the first terminal is the target terminal for the shared COT, in response to that the service type is a broadcast service, the destination address indicated by the SCI carrying the shared COT indication information is a Layer-2 address associated with the broadcast service, and an identifier of the target terminal indicated by the shared COT indication information is the same as a terminal identifier of the first terminal.

In an embodiment, the determining the transmission resource for performing the SL transmission based on the shared COT indication information includes:
determining the transmission resource from candidate resources provided by a physical layer based on time-domain information indicated by the shared COT indication information, where the transmission resource includes a time-domain resource and a frequency-domain resource.

In an embodiment, the determining the transmission resource from the candidate resources provided by the physical layer based on the time-domain information indicated by the shared COT indication information includes:
determining the transmission resource from the candidate resources provided by the physical layer based on the time-domain information indicated by the shared COT indication information, in response to the first terminal being configured with a full sensing or partial sensing capability in a higher layer.

In an embodiment, the determining the transmission resource from the candidate resources provided by the physical layer based on the time-domain information indicated by the shared COT indication information includes:
determining the transmission resource from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier, where the time-domain resource indicated by the transmission resource is within a time-domain range indicated by the shared COT indication information.

In an embodiment, the method further includes:
randomly selecting the transmission resource from the candidate resources provided by the physical layer based on a number of selected frequency resources, and/or a PDB of to-be-transmitted data of a logical channel transmittable on a carrier, in response to failing to determine the transmission resource from the candidate resources provided by the physical layer based on the number of the selected frequency resources and/or the PDB of to-be-transmitted data of the logical channel transmittable on the carrier, and the time-domain information indicated by the shared COT indication information.

In an embodiment, the target transmitting terminal is the initiating terminal for the shared COT.

According to a second aspect, embodiments of the present disclosure provide a resource determination apparatus. The apparatus includes:
a determination module, configured to: determine whether a first terminal is a target terminal of a shared channel occupancy time (COT), in response to receiving shared COT indication information transmitted by an initiating terminal for the shared COT; and determine a transmission resource for performing an SL transmission based on the shared COT indication information, in response to determining that the first terminal is the target terminal or the responding terminal for the shared COT.

According to a third aspect, embodiments of the present disclosure provide a communication device, which includes:
a processor; and
a memory, configured to store instructions executable by the processor,
where the processor is configured to implement the method applied to any of the embodiments of the present disclosure when executing the instructions.

According to a fourth aspect, embodiments provide a computer storage medium, which stores a computer-executable program that, when executed by a processor, implements the method of any of the embodiments of the present disclosure.

In the embodiments of the present disclosure, in response to receiving the shared channel occupancy time (COT) indication information transmitted by the initiating terminal for the shared COT, whether the terminal is the target terminal for the shared COT is determined; and in response to determining that the first terminal is the target terminal for the shared COT, the transmission resource for performing the SL transmission is determined based on the shared COT indication information. In this way, after receiving the shared COT indication information transmitted by the initiating terminal for the shared COT, and determining that the first terminal is the target terminal for the shared COT, the terminal will determine the transmission resource for performing the SL transmission based on the shared COT indication information. Compared to randomly determining a transmission resource for performing an SL transmission, a transmission resource suitable for the COT may be determined, thereby making the SL transmission more reliable.

### BRIEF DESCRIPTION OF THE DRAWINGS

FIG. 1 is a schematic structural diagram of a wireless communication system according to an exemplary embodiment.
FIG. 2 is a flow chart of a resource determination method according to an exemplary embodiment.
FIG. 3 is a flow chart of a resource determination method according to an exemplary embodiment.
FIG. 4 is a flow chart of a resource determination method according to an exemplary embodiment.
FIG. 5 is a flow chart of a resource determination method according to an exemplary embodiment.
FIG. 6 is a flow chart of a resource determination method according to an exemplary embodiment.
FIG. 7 is a schematic diagram of a resource determination apparatus according to an exemplary embodiment.
FIG. 8 is a schematic structural diagram of a terminal according to an exemplary embodiment.
FIG. 9 is a block diagram of a base station according to an exemplary embodiment.

### DETAILED DESCRIPTION

Exemplary embodiments will be described in detail herein, examples of which are illustrated in the accompanying drawings. The following description refers to the accompanying drawings in which the same numbers in different drawings refer to the same or similar elements unless otherwise indicated. The implementations set forth in the following description of illustrative embodiments do not represent all implementations consistent with the embodiments of the present disclosure. They are merely examples of apparatuses and methods consistent with some aspects of the embodiments of the present disclosure as recited in the appended claims.

Terms used in the embodiments of the present disclosure are only for the purpose of describing specific embodiments, and shall not be construed to limit the present disclosure. As used in the embodiments of the present disclosure and the appended claims, "a/an" and "the" in a singular form are intended to include plural forms, unless clearly indicated in the context otherwise. It should be understood that the term "and/or" used herein represents and contains any one of associated listed items and all possible combinations of one or more of associated listed items.

It should be understood that although terms such as "first", "second" and "third" may be used in the embodiments of the present disclosure for describing various information, these information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

For the purpose of simplicity and ease of understanding, terms used in this specification to characterize size relationships are "greater than" or "less than". It may be appreciated by those skilled in the art that the term "greater than" also encompasses the meaning of "greater than or equal to", and the term "less than" also encompasses the meaning of "less than or equal to".

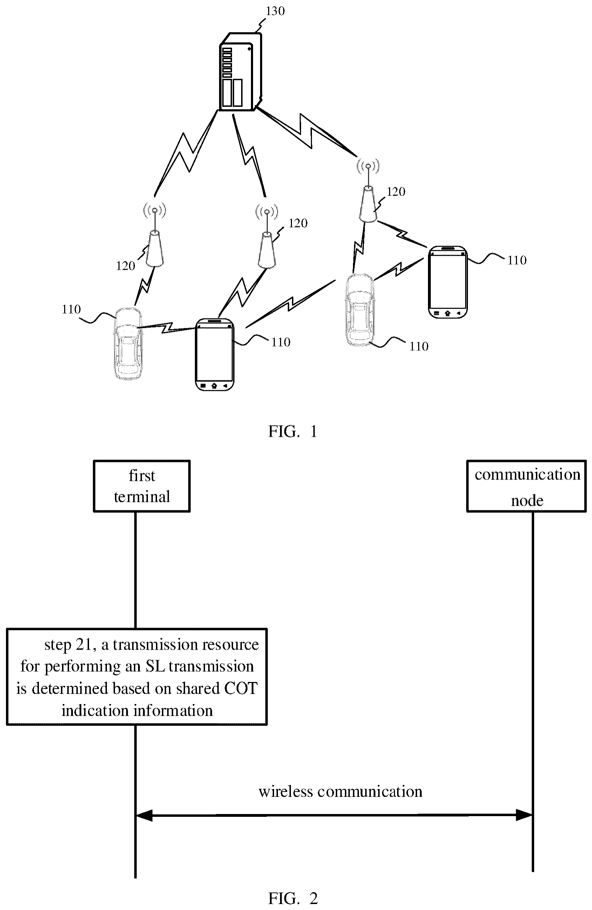

Referring to FIG. 1, FIG. 1 shows a schematic structural diagram of a wireless communication system provided in an embodiment of the present disclosure. As shown in FIG. 1, the wireless communication system is a communication system based on a mobile communication technology, which may include several user equipment (UE) 110 and several base stations 120.

The UE 110 may be a device that provides voice and/or data connectivity to users. The UE 110 may communicate with one or more core networks via a Radio Access Network (RAN). The UE 110 may be an Internet of Things (IoT) UE, such as a sensor device, a mobile phone, or a computer with an IoT UE. For example, it may be a fixed, portable, pocket-sized, hand-held, computer built-in, or vehicle-mounted device. For example, the UE is a station (STA), a subscriber unit, a subscriber station, a mobile station, a mobile, a remote station, an access point, a remote terminal, an access terminal, a user terminal, a user agent, a user device, or user equipment. Alternatively, the UE 110 may also be an unmanned aerial vehicle device. Alternatively, the UE 110 may also be a vehicle mounted device, such as a wireless communication enabled onboard computer or a wireless user device connected to an external onboard computer. Alternatively, the UE 110 may also be a roadside device, such as a street light, signal light, or other roadside device with a wireless communication capability.

The base station 120 may be a network-side device in the wireless communication system. The wireless communication system may be a 4th generation mobile communication (4G) system, also referred to as a Long Term Evolution (LTE) system. Alternatively, the wireless communication system may also be a 5G system, also referred to as a new air interface system or 5G new radio (NR) system. Alternatively, the wireless communication system may also be a next-generation system of the 5G system. The access network in the 5G system may be referred to as NG-RAN (New Generation-Radio Access Network).

The base station 120 may be an evolved NodeB (eNB) used in a 4G system. Alternatively, the base station 120 may also be a next-generation NodeB (gNB) adopting a centralized-distributed architecture in a 5G system. When the base station 120 employs the centralized-distributed architecture, it typically includes a central unit (CU) and at least two distributed units (DUs). The central unit is equipped with protocol stacks for the packet data convergence protocol (PDCP) layer, radio link control (RLC) layer, and media access control (MAC) layer, and the distributed unit is equipped with the physical (PHY) layer protocol stack. The specific implementation of the base station 120 is not limited in the embodiments of the present disclosure.

A wireless connection may be established between the base station 120 and the UE 110 through a wireless air interface. In different implementation methods, the wireless air interface is a wireless air interface based on the fourth generation mobile communication network technology (4G) standard. Alternatively, the wireless air interface is a wireless air interface based on the fifth generation mobile communication network technology (5G) standard, such as a new air interface. Alternatively, the wireless air interface may also be a wireless air interface based on the next-generation mobile communication network technology standard of 5G.

In some embodiments, an E2E (End to End) connection may also be established between UEs 110, for example, in scenarios of a vehicle to everything (V2X) communication, a V2V (Vehicle to Vehicle) communication, a V2I (Vehicle to Infrastructure) communication, and a V2P (Vehicle to Pedestrian) communication.

The above-mentioned UE may be considered as a first terminal in the following embodiments.

In some embodiments, the wireless communication system may also include a network management device 130.

The several base stations 120 are connected to the network management device 130. The network management device 130 may be a core network device in the wireless communication system. For example, the network management device 130 may be a mobility management entity (MME) in an evolved packet core (EPC) network. Alternatively, the network management device may also be other core network devices, such as a serving gateway (SGW), public data network gateway (PGW), a policy and charging rules function (PCRF), or a home subscriber server (HSS). The implementation form of the network management device 130 is not limited in the embodiments of the present disclosure.

In order to facilitate understanding of a person of ordinary skills in the art, multiple implementations are listed in the embodiments of this disclosure to clearly illustrate the technical solution of the embodiments of this disclosure. Of course, those skilled in the art can understand that the method provided in an embodiment of this disclosure can be executed separately, combined with the method of another embodiment of this disclosure, or executed separately or in combination with some methods in other related technologies, which is not limited by the embodiments of the present disclosure.

In order to better understand the embodiments of the present disclosure, the relevant wireless communication scenarios will be introduced below.

In an embodiment, in order to support direct communication between terminals, the sidelink communication method is introduced, and an interface between terminals is PC-5. According to a correspondence between a transmitting terminal and a receiving terminal, the sidelink communication supports three transmission mode, namely unicast, multicast, and broadcast. The transmitting terminal transmits sidelink control information (SCI) on a physical sidelink control channel (PSCCH) and a second stage SCI on a physical sidelink shared channel (PSSCH), where the second stage SCI carries a resource location, source identification and destination identification of transmitted data. For a data packet enabled for a hybrid automatic repeat request (HARQ) feedback, the receiving terminal provides a HARQ-ACK feedback to the PSSCH on a physical sidelink feedback channel (PSFCH).

In an embodiment, the Sidelink communication may have two modes for allocating transmission resources, one is network dynamic scheduling mode (corresponding to mode 1), and the other is autonomous selection mode by a terminal from a resource pool (corresponding to mode 2). In the dynamic scheduling mode, a network dynamically allocates a transmission resource on a sidelink to the terminal based on a buffer status report of the terminal. In the autonomous selection mode, the terminal randomly selecting a transmission resource from a resource pool broadcasted or pre-configured by the network. The network may configure multiple resource pools for the terminal on a bandwidth part (BWP). The specific allocation mode used is configured by the network side via a radio resource control (RRC) signaling.

In an embodiment, NR-U (NR Unlicensed) supports an uplink operation and a downlink operation in unlicensed spectrum. In NR-U, both downlink and uplink channel access rely on the listen before talk (LBT) mechanism. A wireless device or a base station first "sense" a communication channel to ensure no communication before any transmission. In a case that the communication channel is an unlicensed wideband carrier (e.g., several hundred megahertz), the LBT process relies on energy level detection across multiple subbands of the communication channel. LBT parameters (such as a type, a duration, and a clear channel evaluation parameter) are configured by the base station on the wireless device. The LBT type includes type 1 and type 2. The type 1 is based on a contention window, where a duration of channel monitoring is determined by a random number, and channel access is granted only after the random number equals to 0 and the channel is idle. The type 2 is based on a monitoring channel with a fixed period, such as 25 us or 16 us. The channel access priority class (CAPC) is a parameter related to LBT. Different CAPCs affect a priority in channel contention. A smaller CAPC value indicates a higher priority in channel contention.

COT sharing is a feature of R18S SL-U that allows a type 1 LBT terminal device to preempt a COT and share it to another terminal device, but certain requirements are imposed on the terminal device that can share the COT. The terminal device initiating the COT sharing is referred to as a COT initiating UE, and the terminal device using the shared COT is referred to as a target terminal or a responding UE. In an embodiment, the responding UE can share the COT only when the responding UE is the target receiving terminal of the COT initiating UE. However, it is still under discussion on whether it is limited to a target receiving terminal for PSSCH data of the COT initiating UE or a target receiving terminal for all SL transmissions. In addition, there are requirements on a CAPC of a data packet of the responding UE, i.e., a CAPC of a data packet transmitted by the responding UE within the shared COT is less than or equal to a CAPC carried in shared COT information.

In an embodiment, COT sharing is applicable to both mode 1 and mode 2. In a case that the first terminal operates in mode 2 and triggers a resource selection or a resource reselection, if the first terminal is not configured with a random selection capability in a higher layer, the first terminal needs to select a resource from candidate resources provided by a physical layer. The resource needs to be selected within an activation duration of the target terminal (if DRX is configured) based on a number of selected frequency resources and/or a remaining packet delay budget (PDB) requirement of to-be-transmitted data of a logical channel transmittable on a carrier. If the first terminal receives the shared COT information, the first terminal may share part of the COT and preferentially selecting a resource within the COT may reduce the impact of LBT failure on an SL communication.

As shown in FIG. 2, an embodiment provides a resource determination method. The method is executed by a first terminal in a sidelink (SL) communication, and includes the following steps.

In step 21, a transmission resource for performing an SL transmission is determined based on shared COT indication information.

The terminal involved in this disclosure may include, but not limited to, a mobile phone, a wearable device, a vehicle terminal, a road side unit (RSU), a smart home terminal, an industrial sensing device, and/or a medical device. In some embodiments, the terminal may be a Redcap terminal or a new radio (NR) terminal in a predetermined version (e.g., R17 NR terminal). The first terminal in the sidelink (SL) communication may be a terminal that performs a communication based on an SL protocol.

It should be noted that a target terminal in this disclosure may also be referred to as a responding terminal, which is a responding UE for the shared COT.

The base station involved in this disclosure may be of various types, such as a base station in a third generation mobile communication (3G) network, a base station in a fourth generation mobile communication (4G) network, a base station in a fifth generation mobile communication (5G) network, or other evolved base stations.

In an embodiment, whether the first terminal is a target terminal for the shared COT is determined; and the transmission resource for performing the SL transmission is determined based on the shared COT indication information, in response to determining that the first terminal is the target terminal for the shared COT. Only in a case that the first terminal is the target terminal for the shared COT, the first terminal determines the transmission resource for performing the SL transmission based on the shared COT indication information. In a case that the first terminal is not the target terminal for the shared COT, the first terminal will not determine the transmission resource for performing the SL transmission based on the shared COT indication information

In an embodiment, in response to receiving the shared COT indication information transmitted by an initiating terminal for the shared channel occupancy time (COT), whether the first terminal is the target terminal for the shared COT is determined; and in response to determining that the first terminal is the target terminal for the shared COT, the transmission resource for performing the SL transmission is determined based on the shared COT indication information.

In an embodiment, in response to receiving the shared COT indication information transmitted by an initiating terminal for the shared channel occupancy time (COT), whether the first terminal is the target terminal for the shared COT is determined; and in response to determining that the first terminal is the target terminal for the shared COT, and the first terminal triggering a resource selection, the transmission resource for performing the SL transmission is determined based on the shared COT indication information.

In an embodiment, in response to receiving the shared COT indication information transmitted by an initiating terminal for the shared channel occupancy time (COT), whether the first terminal is the target terminal for the shared COT is determined; and in response to determining that the first terminal is the target terminal for the shared COT, and the first terminal triggering a resource reselection, the transmission resource for performing the SL transmission is determined based on the shared COT indication information.

In an embodiment, the transmission resource for performing the SL transmission is determined based on the shared COT indication information. The shared COT indication information indicates at least one of: a starting symbol, a starting slot, a starting subframe, or a starting frame of the shared COT; an ending symbol, an ending slot, an ending subframe, or an ending frame of the shared COT; a duration of the shared COT; a starting symbol, a starting slot, a starting subframe, or a starting frame of a remaining COT of the shared COT; an ending symbol, an ending slot, an ending subframe, or an ending frame of a remaining COT of the shared COT; a remaining duration of the shared COT; identification information of the initiating terminal for the shared COT; identification information of the target terminal for the shared COT; or channel access priority class (CAPC) information of the shared COT.

In an embodiment, in response to determining that the first terminal is the target terminal for the shared COT, the transmission resource for performing the SL transmission is determined based on the shared COT indication information. The shared COT indication information indicates at least one of: a starting symbol, a starting slot, a starting subframe, or a starting frame of the shared COT; an ending symbol, an ending slot, an ending subframe, or an ending frame of the shared COT; a duration of the shared COT; a starting symbol, a starting slot, a starting subframe, or a starting frame of a remaining COT of the shared COT; an ending symbol, an ending slot, an ending subframe, or an ending frame of a remaining COT of the shared COT; a remaining duration of the shared COT; identification information of the initiating terminal for the shared COT; identification information of the target terminal for the shared COT; or channel access priority class (CAPC) information of the shared COT.

In an embodiment, in response to receiving the shared channel occupancy time (COT) indication information transmitted by the initiating terminal for the shared COT, whether the first terminal is the target terminal for the shared COT is determined; and in response to determining that the first terminal is the target terminal for the shared COT, the transmission resource for performing the SL transmission is determined based on the shared COT indication information. The shared COT indication information indicates at least one of: a starting symbol, a starting slot, a starting subframe, or a starting frame of the shared COT; an ending symbol, an ending slot, an ending subframe, or an ending frame of the shared COT; a duration of the shared COT; a starting symbol, a starting slot, a starting subframe, or a starting frame of a remaining COT of the shared COT; an ending symbol, an ending slot, an ending subframe, or an ending frame of a remaining COT of the shared COT; a remaining duration of the shared COT; identification information of the initiating terminal for the shared COT; identification information of the target terminal for the shared COT; or channel access priority class (CAPC) information of the shared COT.

In an embodiment, in response to the first terminal triggering a resource selection or a resource reselection, the transmission resource for performing the SL transmission is determined based on the shared COT indication information. The shared COT indication information indicates at least one of: a starting symbol, a starting slot, a starting subframe, or a starting frame of the shared COT; an ending symbol, an ending slot, an ending subframe, or an ending frame of the shared COT; a duration of the shared COT; a starting symbol, a starting slot, a starting subframe, or a starting frame of a remaining COT of the shared COT; an ending symbol, an ending slot, an ending subframe, or an ending frame of a remaining COT of the shared COT; a remaining duration of the shared COT; identification information of the initiating terminal for the shared COT; identification information of the target terminal for the shared COT; or channel access priority class (CAPC) information of the shared COT.

In an embodiment, in response to determining that the first terminal is the target terminal for the shared COT, and the first terminal triggering a resource selection or a resource reselection, the transmission resource for performing the SL transmission is determined based on the shared COT indication information. The shared COT indication information indicates at least one of: a starting symbol, a starting slot, a starting subframe, or a starting frame of the shared COT; an ending symbol, an ending slot, an ending subframe, or an ending frame of the shared COT; a duration of the shared COT; a starting symbol, a starting slot, a starting subframe, or a starting frame of a remaining COT of the shared COT; an ending symbol, an ending slot, an ending subframe, or an ending frame of a remaining COT of the shared COT; a remaining duration of the shared COT; identification information of the initiating terminal for the shared COT; identification information of the target terminal for the shared COT; or channel access priority class (CAPC) information of the shared COT.

In an embodiment, in response to receiving the shared channel occupancy time (COT) indication information transmitted by the initiating terminal for the shared COT, whether the first terminal is the target terminal for the shared COT is determined; and in response to determining that the first terminal is the target terminal for the shared COT, and the first terminal triggering a resource selection or a resource reselection, the transmission resource for performing the SL transmission is determined based on the shared COT indication information. The shared COT indication information indicates at least one of: a starting symbol, a starting slot, a starting subframe, or a starting frame of the shared COT; an ending symbol, an ending slot, an ending subframe, or an ending frame of the shared COT; a duration of the shared COT; a starting symbol, a starting slot, a starting subframe, or a starting frame of a remaining COT of the shared COT; an ending symbol, an ending slot, an ending subframe, or an ending frame of a remaining COT of the shared COT; a remaining duration of the shared COT; identification information of the initiating terminal for the shared COT; identification information of the target terminal for the shared COT; or channel access priority class (CAPC) information of the shared COT. In an embodiment, whether the first terminal is the target terminal for the shared COT is determined based on a destination address of a data packet carrying the shared COT indication information. In response to determining that the first terminal is the target terminal for the shared COT, the transmission resource for performing the SL transmission is determined based on the shared COT indication information.

In an embodiment, in response to receiving the shared channel occupancy time (COT) indication information transmitted by the initiating terminal for the shared COT, whether the first terminal is the target terminal for the shared COT is determined based on the destination address of the data packet carrying the shared COT indication information. In response to determining that the first terminal is the target terminal for the shared COT, the transmission resource for performing the SL transmission is determined based on the shared COT indication information.

In an embodiment, whether the first terminal is the target terminal for the shared COT is determined based on a destination address and a service type of the data packet carrying the shared COT indication information. The service type is a service type indicated by an SCI carrying the shared COT indication information. The service type may be a unicast service, a multicast service, or a broadcast service.

In an embodiment, in response to that the service type indicated by the SCI carrying the shared COT indication information is a unicast service, and a destination address indicated by the sidelink control information (SCI) carrying the shared COT indication information is a Layer-2 address of the first terminal, it is determined that the first terminal is the target terminal for the shared COT. In response to determining that the first terminal is the target terminal for the shared COT, the transmission resource for performing the SL transmission is determined based on the shared COT indication information.

In an embodiment, the first terminal is determined to be the target terminal for the shared COT, in response to determining that a Source Layer-1 ID carried in the SCI carrying the shared COT indication information is equal to the 8 LSBs (Least Significant Bit) of the Layer-2 address of the COT initiating terminal, that a Destination Layer-1 ID carried in the SCI carrying the shared COT indication information is equal to the 16 LSBs (Least Significant Bit) of the Layer-2 address of the first terminal, and that a cast type indicated by the SCI carrying the shared COT indication information is a unicast. In response to determining that the first terminal is the target terminal for the shared COT, the transmission resource for performing the SL transmission is determined based on the shared COT indication information.

For example, in a case that there is a unicast connection between the first terminal and the initiating terminal for the shared COT, and a destination address of a data packet (SL MAC PDU) carrying the shared COT indication information is the Layer-2 address of the first terminal, the first terminal is determined to be a responding terminal for the shared COT.

In an embodiment, it is determined that the first terminal is the target terminal for the shared COT, in response to determining that the service type indicated by the SCI carrying the shared COT indication information is a multicast service, that the destination address indicated by the SCI carrying the shared COT indication information is a Layer-2 address associated with the multicast service, and that an identifier of the target terminal indicated by the shared COT indication information is the same as a terminal identifier of the first terminal. In response to determining that the first terminal is the target terminal for the shared COT, the transmission resource for performing the SL transmission is determined based on the shared COT indication information.

In an embodiment, the first terminal is determined to be the target terminal for the shared COT, in response to determining that a Destination Layer-1 ID carried in the SCI carrying the shared COT indication information is equal to 16 LSBSs (Least Significant Bit) of an intended destination Layer-2 address/destination Layer-1 address, that a cast type indicated by the SCI carrying the shared COT indication information is multicast, and that an identifier of the target terminal indicated by the shared COT indication information is the same as a terminal identifier of the first terminal. In response to determining that the first terminal is the target terminal for the shared COT, the transmission resource for performing the SL transmission is determined based on the shared COT indication information. It should be noted that the intended destination Layer-2 address is associated with the multicast service. It should be further noted that the identifier of the target terminal indicated by the shared COT indication information may be a Layer-2 address of the target terminal, an application layer address of the target terminal, or a member ID of the target terminal. The identifier of the target terminal being the same as the terminal identifier of the first terminal may refer to at least one of the following cases: a case where the identifier of the target terminal indicated by the shared COT indication information is the Layer-2 address of the target terminal, the Layer-2 address of the target terminal is the same as the Layer-2 address of the first terminal; a case where the identifier of the target terminal indicated by the shared COT indication information is the application layer address of the target terminal, the application layer address of the target terminal is the same as an application layer address of the first terminal; or a case where the identifier of the target terminal indicated by the shared COT indication information is the member ID of the target terminal, the member ID of the target terminal is the same as a member ID of the first terminal. By way of example, the identifier of the target terminal indicated by the shared COT indication information may also be implemented in other manners, which are not specifically limited in the embodiments.

For example, the first terminal is determined to be the responding terminal for the shared COT, in a case that a multicast service is performed between the first terminal and the initiating terminal for the shared COT, the first terminal and the initiating terminal for the shared COT belong to the same group, the destination address of the data packet (SL MAC PDU) carrying the shared COT indication information is the Layer-2 address associated with the multicast service, and the identifier of the target terminal indicated by the shared COT indication information is the same as the terminal identifier of the first terminal.

In an embodiment, it is determined that the first terminal is the target terminal for the shared COT, in response to that a broadcast service is performed between the first terminal and the initiating terminal for the COT, the destination address indicated by the SCI carrying the shared COT indication information is a Layer-2 address associated with the broadcast service, and the identifier of the target terminal indicated by the shared COT indication information is the same as the terminal identifier of the first terminal. In response to determining that the first terminal is the target terminal for the shared COT, the transmission resource for performing the SL transmission is determined based on the shared COT indication information.

In an embodiment, the first terminal is determined to be the target terminal for the shared COT, in response to that the Destination Layer-1 ID carried in the SCI carrying the shared COT indication information is equal to the 16 LSBSs (Least Significant Bit) of the intended destination Layer-2 address or the intended destination Layer-1 address, that a cast type indicated by the SCI is broadcast, and that the identifier of the target terminal indicated by the shared COT indication information is the same as the terminal identifier of the first terminal. In response to determining that the first terminal is the target terminal for the shared COT, the transmission resource for performing the SL transmission is determined based on the shared COT indication information.

It should be noted that the intended target Layer-2 address is associated with the broadcast service, and the broadcast service is a broadcast service that the first terminal is interested in receiving. It should be noted that the identifier of the target terminal indicated by the shared COT indication information may be the Layer-2 address of the target terminal or the application layer address of the target terminal. The identifier of the target terminal being same as the terminal identifier of the first terminal refers to a case where the identifier of the target terminal indicated by the shared COT indication information is the Layer-2 address of the target terminal, and the Layer-2 address of the target terminal is the same as the Layer-2 address of the first terminal; or a case where the identifier of the target terminal indicated by the shared COT indication information is the application layer address of the target terminal, and the application layer address of the target terminal is the same as an application layer address of the first terminal. By way of example, the identifier of the target terminal indicated by the shared COT indication information may also be implemented in other methods, which are not specifically limited in the embodiments.

For example, the first terminal determines itself as the responding terminal for the shared COT, in a case that a broadcast service is performed between the first terminal and the initiating terminal for the shared COT, the destination address of the data packet (SL MAC PDU) carrying the shared COT information is the Layer-2 address associated with the broadcast service of interest to the first terminal, and the identifier of the target terminal indicated by the shared COT indication information is the same as the terminal identifier of the first terminal.

In an embodiment, whether the first terminal is the target terminal for the shared COT is determined; and in response to determining that the first terminal is the target terminal for the shared COT, the transmission resource is determined from candidate resources provided by a physical layer based on time-domain information indicated by the shared COT indication information. The transmission resource includes a time-domain resource and a frequency-domain resource.

In an embodiment, whether the first terminal is the target terminal for the shared COT is determined; and in response to determining that the first terminal is the target terminal for the shared COT, and the first terminal triggering a resource selection or a resource reselection, the transmission resource is determined from the candidate resources provided by the physical layer based on the time-domain information indicated by the shared COT indication information. The transmission resource includes a time-domain resource and a frequency-domain resource.

In an embodiment, in response to receiving the shared channel occupancy time (COT) indication information transmitted by the initiating terminal for the shared COT, whether the first terminal is the target terminal for the shared COT is determined; and in response to determining that the first terminal is the target terminal for the shared COT, the transmission resource is determined from the candidate resources provided by the physical layer based on the time-domain information indicated by the shared COT indication information. The transmission resource includes a time-domain resource and a frequency-domain resource.

In an embodiment, in response to receiving the shared channel occupancy time (COT) indication information transmitted by the initiating terminal for the shared COT, whether the first terminal is the target terminal for the shared COT is determined; and in response to determining that the first terminal is the target terminal for the shared COT, and the first terminal triggering a resource selection or a resource reselection, the transmission resource is determined from the candidate resources provided by the physical layer based on the time-domain information indicated by the shared COT indication information. The transmission resource includes a time-domain resource and a frequency-domain resource.

In an embodiment, whether the first terminal is the target terminal for the shared COT is determined; and in response to determining that the first terminal is the target terminal for the shared COT, and the first terminal being configured with a full sensing or partial sensing capability in a higher layer, the transmission resource is determined from the candidate resources provided by the physical layer based on the time-domain information indicated by the shared COT indication information. The transmission resource includes a time-domain resource and a frequency-domain resource.

For example, if the first terminal has its own sensing result and receives the shared COT indication information. The first terminal selects a resource from an intersection set of the time-domain information indicated by the shared COT indication information and the candidate resources provided by the physical layer. It should be noted that the first terminal having its own sensing result refers to the first terminal being configured with the full sensing or partial sensing capability in a higher layer.

In an embodiment, in response to receiving the shared channel occupancy time (COT) indication information transmitted by the initiating terminal for the shared COT, whether the first terminal is the target terminal for the shared COT is determined; and in response to determining that the first terminal is the target terminal for the shared COT, the first terminal triggering a resource selection or a resource reselection, and the first terminal being configured with a full sensing or partial sensing capability in a higher layer, the transmission resource is determined from the candidate resources provided by the physical layer based on the time-domain information indicated by the shared COT indication information. The transmission resource includes a time-domain resource and a frequency-domain resource.

In an embodiment, the transmission resource is determined from the candidate resources provided by the physical layer based on the time-domain information indicated by the shared COT indication information, and at least one of an activation time of a target transmitting terminal (if discontinuous reception (DRX) is configured), a number of selected frequency resources, or a remaining packet delay budget (PDB) of to-be-transmitted data of a logical channel transmittable on a carrier. The transmission resource includes a time-domain resource and a frequency-domain resource. The time-domain resource indicated by the transmission resource is located within a time-domain range indicated by the shared COT indication information.

By way of example, the time-domain resource indicated by the transmission resource is included in a duration of a remaining COT of the shared COT indicated by the shared COT indication information.

For example, the time-domain resource indicated by the transmission resource is included in a duration of the shared COT indicated by the shared COT indication information.

For example, the time-domain resource indicated by the transmission resource is included in a duration of the shared COT indicated by the shared COT indication information, or the time-domain resource indicated by the transmission resource is included in a duration of a remaining COT of the shared COT indicated by the shared COT indication information.

For example, in a case that the shared COT indication information includes a duration of the shared COT or a duration of a remaining COT of the shared COT, the first terminal may determine the duration of the shared COT or the duration of the remaining COT of the shared COT.

For example, in a case that the shared COT indication information includes a starting time of the shared COT and an ending time of the shared COT, the first terminal device may determine the duration of the shared COT based on the starting time of the shared COT and the ending time of the shared COT.

For example, in a case that the shared COT indication information includes a starting time of the remaining COT of the shared COT and an ending time of the remaining COT of the shared COT, the first terminal may determine the duration of the remaining COT of the shared COT based on the starting time of the remaining COT of the shared COT and the ending time of the remaining COT of the shared COT.

The starting time of the shared COT may be represented by a frame, a subframe, a slot, or a symbol, and the ending time of the shared COT may also be represented by a frame, a subframe, a slot, or a symbol. The starting time of the remaining COT of the shared COT may be represented by a frame, a subframe, a slot, or a symbol, and the ending time of the remaining COT of the shared COT may be represented by a frame, a subframe, a slot, or a symbol.

It should be noted that the target transmitting terminal for the transmission resource may be the initiating terminal for the shared COT or another terminal (the destination address of the SL MAC PDU carried on the transmission resource may be the Layer-2 address of the COT initiating terminal or a Layer-2 address of the other terminal). For example, it may be limited that the target transmitting terminal for the transmission resource may only be the initiating terminal for the shared COT (the destination address of the SL MAC PDU carried on the transmission resource may only be the Layer-2 address of the COT initiating terminal).

In an embodiment, the first terminal selects a resource from an intersection set of the candidate resources provided by the physical layer and the time-domain information indicated by the shared COT indication. The transmission resource needs to be selected within the activation time of the target transmitting terminal (if discontinuous reception (DRX) is configured) based on the number of selected frequency resources and the remaining PDB of the to-be-transmitted data of the logical channel transmittable on the carrier. The target transmitting terminal for the transmission resource may be the initiating terminal for the shared COT or another terminal (the destination address of the SL MAC PDU carried on the transmission resource may be the Layer-2 address of the initiating terminal for the shared COT or a Layer-2 address of the other terminal).

In an embodiment, the first terminal selects a resource from the intersection of the candidate resources provided by the physical layer and the time-domain information indicated by the shared COT indication. The transmission resource needs to be selected within the activation time of the target transmitting terminal (if discontinuous reception (DRX) is configured) based on the number of selected frequency resources and the remaining PDB of the to-be-transmitted data of the logical channel transmittable on the carrier. The target transmitting terminal for the transmission resource may only be the initiating terminal for the shared COT (the destination address of the SL MAC PDU carried on the transmission resource may only be the Layer-2 address of the initiating terminal for the shared COT).

In an embodiment, the first terminal selects the transmission resource from the intersection of the time-domain resource(s) indicated by the shared COT indication information and the candidate resources provided by the physical layer, and then randomly selects a resource from the candidate resources provided by the physical layer.

The transmission resource is randomly selected from the candidate resources provided by the physical layer based on a number of selected frequency resources, and/or a PDB of to-be-transmitted data of a logical channel transmittable on a carrier, in response to failing to determine the transmission resource from the candidate resources provided by the physical layer based on the number of the selected frequency resources and/or the PDB of to-be-transmitted data of the logical channel transmittable on the carrier. The transmission resource includes a time-domain resource and a frequency-domain resource.

In an embodiment, in a case that there is no available resource from the intersection of the candidate resources provided by the physical layer and the time-domain information indicated by the shared COT indication based on the number of selected frequency resources and the remaining PDB of the to-be-transmitted data of the logical channel transmittable on the carrier, the first terminal randomly selects a resource from the candidate resources provided by the physical layer based on the number of the selected frequency resources and the remaining PDB of the to-be-transmitted data of the logical channel transmittable on the carrier. The target transmitting terminal for the transmission resource may be the initiating terminal for the shared COT or another terminal (the destination address of the SL MAC PDU carrying the transmission resource may be the Layer-2 address of the initiating terminal for the shared COT or the Layer-2 address of the other terminal). In an embodiment, the target transmitting terminal for the transmission resource may be limited to only be the initiating terminal for the shared COT (the destination address of the SL MAC PDU carried on the transmission resource may only be the Layer-2 address of the initiating terminal for the shared COT).

In the embodiments of the present disclosure, in response to receiving the shared channel occupancy time (COT) indication information transmitted by the initiating terminal for the shared COT, whether the first terminal is the target terminal for the shared COT is determined; and in response to determining that the first terminal is the target terminal for the shared COT, the transmission resource for performing the SL transmission is determined based on the shared COT indication information. In this way, after the first terminal receives the shared COT indication information transmitted by the initiating terminal for the shared COT, and determines that the first terminal is the target terminal for the shared COT, the first terminal will determine the transmission resource for performing the SL transmission based on the shared COT indication information. Compared to randomly determining a transmission resource for performing an SL transmission, this method prioritizes to select the resource within the time-domain range indicated by the shared COT, thereby enhancing the reliability of SL data transmissions. This improvement is attributed to the ability of the first terminal to use Type 2 LBT within the shared COT, which increases the success rate of the LBT procedure.

It should be noted that those skilled in the art may understand that the method provided in an embodiment of the present disclosure may be executed separately or together with some methods in the other embodiments of the present disclosure or in the related technologies.

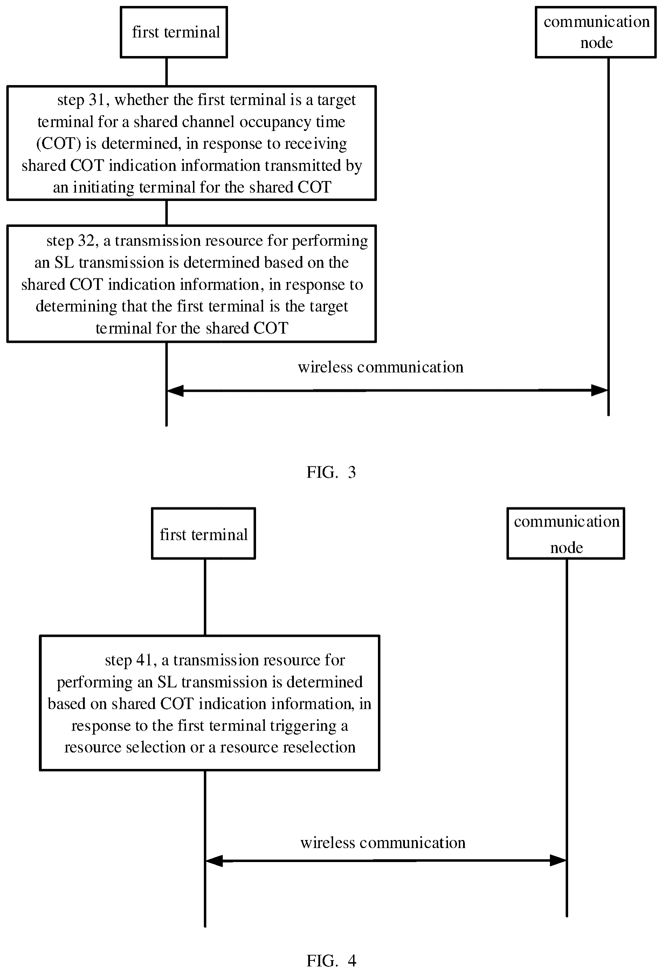

As shown in FIG. 3, an embodiment provides a resource determination method. The method is executed by a first terminal in a sidelink (SL) communication, and includes the following steps.

In step 31, whether the first terminal is a target terminal for a shared channel occupancy time (COT) is determined, in response to receiving shared COT indication information transmitted by an initiating terminal for the shared COT.

In step 32, a transmission resource for performing an SL transmission is determined based on the shared COT indication information, in response to determining that the first terminal is the target terminal for the shared COT.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, and the first terminal triggering a resource selection, the transmission resource for performing the SL transmission is determined based on the shared COT indication information.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, and the first terminal triggering a resource reselection, the transmission resource for performing the SL transmission is determined based on the shared COT indication information.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the transmission resource for performing the SL transmission is determined based on the shared COT indication information. The shared COT indication information indicates at least one of: a starting symbol, a starting slot, a starting subframe, or a starting frame of the shared COT; an ending symbol, an ending slot, an ending subframe, or an ending frame of the shared COT; a duration of the shared COT; a starting symbol, a starting slot, a starting subframe, or a starting frame of a remaining COT of the shared COT; an ending symbol, an ending slot, an ending subframe, or an ending frame of a remaining COT of the shared COT; a remaining duration of the shared COT; identification information of the initiating terminal for the shared COT; identification information of the target terminal for the shared COT; or channel access priority class (CAPC) information of the shared COT.

In an embodiment, in response to receiving the shared COT indication information transmitted by the initiating terminal for the shared channel occupancy time (COT), whether the first terminal is the target terminal for the shared COT is determined based on a destination address of a data packet carrying the shared COT indication information. In response to determining that the first terminal is the target terminal for the shared COT, the transmission resource for performing the SL transmission is determined based on the shared COT indication information.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the transmission resource is determined from candidate resources provided by a physical layer based on time-domain information indicated by the shared COT indication information. The transmission resource includes a time-domain resource and a frequency-domain resource.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the first terminal triggering a resource selection, and the first terminal being configured with a full sensing or partial sensing capability in a higher layer, the transmission resource is determined from candidate resources provided by a physical layer based on time-domain information indicated by the shared COT indication information. The transmission resource includes a time-domain resource and a frequency-domain resource.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the first terminal triggering a resource selection or a resource reselection, and the first terminal being configured with a full sensing or partial sensing capability in a higher layer, the transmission resource is determined from candidate resources provided by a physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource, and the time-domain resource indicated by the transmission resource is located in a time-domain range indicated by the shared COT indication information.

In an embodiment, in response to receiving the shared channel occupancy time (COT) indication information transmitted by the initiating terminal for the shared COT, whether the first terminal is the target terminal for the shared COT is determined. In a case that the first terminal is determined as the target terminal for the shared COT, the first terminal triggers a resource selection or a resource reselection, the first terminal is configured with a full sensing or partial sensing capability in a higher layer, and the transmission resource can not be determined from candidate resources provided by a physical layer based on a number of selected frequency resources and/or a PDB of to-be-transmitted data of a logical channel transmittable on a carrier, and the time-domain information indicated by the COT shared indication information, the transmission resource is randomly selected from the candidate resources provided by the physical layer based on the number of the selected frequency resources and/or the PDB of the to-be-transmitted data of the logical channel transmittable on the carrier. The transmission resource includes a time-domain resource and a frequency-domain resource.

It should be noted that those skilled in the art may understand that the method provided in an embodiment of the present disclosure may be executed separately or together with some methods in the other embodiments of the present disclosure or in the related technologies.

As shown in FIG. 4, an embodiment provides a resource determination method. The method is executed by a first terminal in a sidelink (SL) communication, and includes the following steps.

In step 41, a transmission resource for performing an SL transmission is determined based on shared COT indication information, in response to the first terminal triggering a resource selection or a resource reselection.

In an embodiment, in response to receiving the shared COT indication information transmitted by an initiating terminal for the shared channel occupancy time (COT), whether the first terminal is a target terminal for the shared COT is determined; and in response to determining that the first terminal is the target terminal for the shared COT, and the first terminal triggering a resource selection, the transmission resource for performing the SL transmission is determined based on the shared COT indication information.

In an embodiment, in response to receiving the shared COT indication information transmitted by an initiating terminal for the shared channel occupancy time (COT), whether the first terminal is a target terminal for the shared COT is determined; and in response to determining that the first terminal is the target terminal for the shared COT, and the first terminal triggering a resource reselection, the transmission resource for performing the SL transmission is determined based on the shared COT indication information.

It should be noted that those skilled in the art may understand that the method provided in an embodiment of the present disclosure may be executed separately or together with some methods in the other embodiments of the present disclosure or in the related technologies.

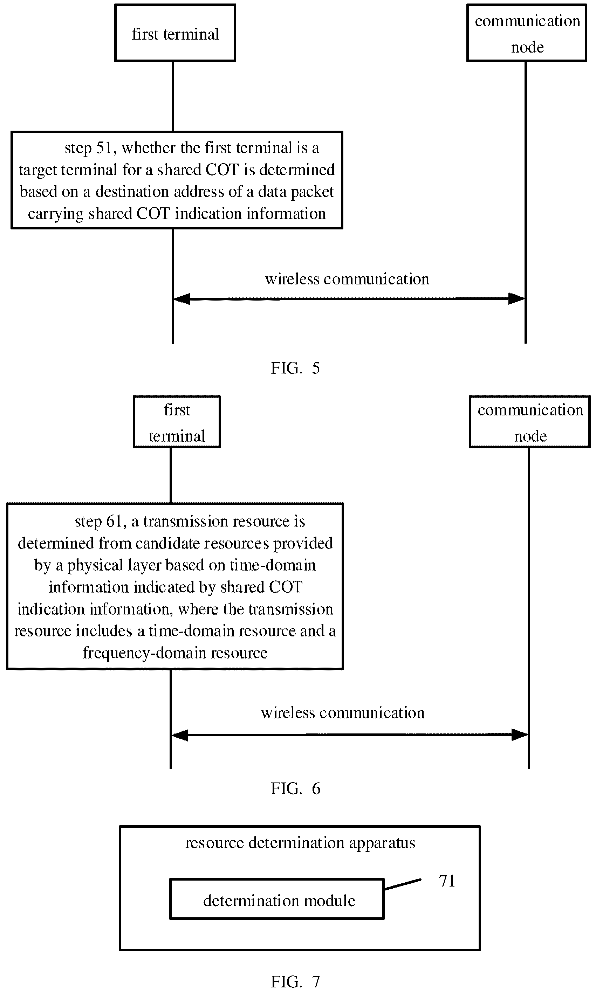

As shown in FIG. 5, an embodiment provides a resource determination method. The method is executed by a first terminal in a sidelink (SL) communication, and includes the following steps.

In step 51, whether the first terminal is a target terminal for a shared COT is determined based on a destination address of a data packet carrying shared COT indication information.

In an embodiment, whether the first terminal is the target terminal for the shared COT is determined based on the destination address and a service type of the data packet carrying the shared COT indication information. The service type is a service type indicated by SCI carrying the shared COT indication information. The service type may be a unicast service, a multicast service, or a broadcast service.

In an embodiment, whether the first terminal is the target terminal for the shared COT is determined based on the destination address of the data packet carrying the shared COT indication information. In response to determining that the first terminal is the target terminal for the shared COT, a transmission resource for performing an SL transmission is determined based on the shared COT indication information. In an embodiment, in response to receiving the shared channel occupancy time (COT) indication information transmitted by an initiating terminal for the shared COT, whether the first terminal is the target terminal for the shared COT is determined based on the destination address of the data packet carrying the shared COT indication information. In response to determining that the first terminal is the target terminal for the shared COT, the transmission resource for performing the SL transmission is determined based on the shared COT indication information.

In an embodiment, in response to that the service type indicated by the SCI carrying the shared COT indication information is a unicast service, and that a destination address indicated by the sidelink control information (SCI) carrying the shared COT indication information is a Layer-2 address of the first terminal, it is determined that the first terminal is the target terminal for the shared COT. In response to determining that the first terminal is the target terminal for the shared COT, the transmission resource for performing the SL transmission is determined based on the shared COT indication information.

In an embodiment, the first terminal is determined to be the target terminal for the shared COT, in response to determining that a Source Layer-1 ID carried in the SCI carrying the shared COT indication information is equal to 8 LSBs (Least Significant Bit) of a Layer-2 address of the COT initiating terminal, that a Destination Layer-1 ID carried in the SCI carrying the shared COT indication information is equal to 16 LSBs (Least Significant Bit) of the Layer-2 address of the first terminal, and that a cast type indicated by the SCI carrying the shared COT indication information is a unicast. In response to determining that the first terminal is the target terminal for the shared COT, the transmission resource for performing the SL transmission is determined based on the shared COT indication information.

For example, in a case that there is a unicast connection between the first terminal and the initiating terminal for the shared COT, and a destination address of a data packet (SL MAC PDU) carrying the shared COT indication information is the Layer-2 address of the first terminal, the first terminal determines itself as a responding terminal for the shared COT.

In an embodiment, it is determined that the first terminal is the target terminal for the shared COT, in response to determining that the service type indicated by the data packet carrying the shared COT indication information is a multicast service, that the destination address indicated by the SCI carrying the shared COT indication information is a Layer-2 address associated with the multicast service, and that an identifier of the target terminal indicated by the shared COT indication information is the same as a terminal identifier of the first terminal. In response to determining that the first terminal is the target terminal for the shared COT, the transmission resource for performing the SL transmission is determined based on the shared COT indication information.

In an embodiment, the first terminal is determined to be the target terminal for the shared COT, in response to determining that a Destination Layer-1 ID carried in the SCI carrying the shared COT indication information is equal to 16 LSBSs (Least Significant Bit) of an intended destination Layer-2 address or an intended destination Layer-1 address, that a cast type indicated by the SCI carrying the shared COT indication information is multicast, and that an identifier of the target terminal indicated by the shared COT indication information is the same as a terminal identifier of the first terminal. In response to determining that the first terminal is the target terminal for the shared COT, the transmission resource for performing the SL transmission is determined based on the shared COT indication information.

It should be noted that the intended destination Layer-2 address is associated with the multicast service. It should be noted that the identifier of the target terminal indicated by the shared COT indication information may be a Layer-2 address of the target terminal, an application layer address of the target terminal, or a member ID of the target terminal. The identifier of the target terminal being the same as the terminal identifier of the first terminal may refer to at least one of the following cases: a case where the identifier of the target terminal indicated by the shared COT indication information is the Layer-2 address of the target terminal, the Layer-2 address of the target terminal is the same as the Layer-2 address of the first terminal; a case where the identifier of the target terminal indicated by the shared COT indication information is the application layer address of the target terminal, and the application layer address of the target terminal is the same as an application layer address of the first terminal; or a case where the identifier of the target terminal indicated by the shared COT indication information is the member ID of the target terminal, and the member ID of the target terminal is the same as a member ID of the first terminal. By way of example, the identifier of the target terminal indicated by the shared COT indication information may also be implemented in other manners, which are not specifically limited in the embodiments.

For example, the first terminal determines itself as the responding terminal for the shared COT, in a case that a multicast service is performed between the first terminal and the initiating terminal for the shared COT, the first terminal and the initiating terminal for the shared COT belong to the same group, the destination address of the data packet (SL MAC PDU) carrying the shared COT indication information is the Layer-2 address associated with the multicast service, and the identifier of the target terminal indicated by the shared COT indication information is the same as the terminal identifier of the first terminal.

In an embodiment, it is determined that the first terminal is the target terminal for the shared COT, in a case that a broadcast service is performed between the first terminal and the initiating terminal for the COT, the destination address indicated by the SCI carrying the shared COT indication information is a Layer-2 address associated with the broadcast service, and the identifier of the target terminal indicated by the shared COT indication information is the same as the terminal identifier of the first terminal. In response to determining that the first terminal is the target terminal for the shared COT, the transmission resource for performing the SL transmission is determined based on the shared COT indication information.

In an embodiment, the first terminal is determined to be the target terminal for the shared COT, in a case that the Destination Layer-1 ID carried in the SCI carrying the shared COT indication information is equal to the 16 LSBSs (Least Significant Bit) of the intended destination Layer-2 address or the intended destination Layer-1 address, a cast type indicated by the SCI is broadcast, and the identifier of the target terminal indicated by the shared COT indication information is the same as the terminal identifier of the first terminal. In response to determining that the first terminal is the target terminal for the shared COT, the transmission resource for performing the SL transmission is determined based on the shared COT indication information.

It should be noted that the intended target Layer-2 address is associated with the broadcast service, and the broadcast service is a broadcast service that the first terminal is interested in receiving. It should be noted that the identifier of the target terminal indicated by the shared COT indication information may be the Layer-2 address of the target terminal or the application layer address of the target terminal. The identifier of the target terminal being same as the terminal identifier of the first terminal refers to a case where the identifier of the target terminal indicated by the shared COT indication information is the Layer-2 address of the target terminal, and the Layer-2 address of the target terminal is the same as the Layer-2 address of the first terminal; or a case where the identifier of the target terminal indicated by the shared COT indication information is the application layer address of the target terminal, and the application layer address of the target terminal is the same as an application layer address of the first terminal. By way of example, the identifier of the target terminal indicated by the shared COT indication information may also be implemented in other manners, which are not specifically limited in the embodiments.

For example, the first terminal determines itself as the responding terminal for the shared COT, in a case that a broadcast service is performed between the first terminal and the initiating terminal for the shared COT, the destination address of the data packet (SL MAC PDU) carrying the shared COT information is the Layer-2 address associated with the broadcast service of interest to the first terminal, and the identifier of the target terminal indicated by the shared COT indication information is the same as the terminal identifier of the first terminal.

In an embodiment, in response to receiving the shared COT indication information transmitted by an initiating terminal for the shared channel occupancy time (COT), whether the first terminal is the target terminal for the shared COT is determined; and in response to determining that the first terminal is the target terminal for the shared COT, the transmission resource is determined from the candidate resources provided by the physical layer based on the time-domain information indicated by the shared COT indication information. The transmission resource includes a time-domain resource and a frequency-domain resource.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the transmission resource is determined from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource. The time-domain resource indicated by the transmission resource is within a time-domain range indicated by the shared COT indication information.

In an embodiment, in response to receiving the shared COT indication information transmitted by the initiating terminal for the shared channel occupancy time (COT), whether the first terminal is the target terminal for the shared COT is determined; and the transmission resource is randomly selected from the candidate resources provided by the physical layer based on a number of selected frequency resources, and/or a PDB of to-be-transmitted data of a logical channel transmittable on a carrier, in response to determining that the first terminal is the target terminal for the shared COT, and failing to determine the transmission resource from the candidate resources provided by the physical layer based on the number of the selected frequency resources and/or the PDB of to-be-transmitted data of the logical channel transmittable on the carrier, and the time-domain information indicated by the shared COT indication information. The transmission resource includes a time-domain resource and a frequency-domain resource. It should be noted that the time-domain resource indicated by the transmission resource that cannot be determined from the candidate resources provided by the physical layer based on the time-domain information indicated by the shared COT indication information is located within the time-domain range indicated by the shared COT indication information. The failing to determine (or select) the transmission resource is due to all resources within the time-domain range indicated by the shared COT indication information having been selected (or occupied).

In an embodiment, in response to receiving the shared COT indication information transmitted by the initiating terminal for the shared channel occupancy time (COT), whether the first terminal is the target terminal for the shared COT is determined; and the transmission resource is determined from the candidate resources provided by the physical layer based on the time-domain information indicated by the shared COT indication information, in response to determining that the first terminal is the target terminal for the shared COT, the first terminal triggering a resource selection or a resource reselection, and the first terminal being configured with a full sensing or partial sensing capability in a higher layer. The transmission resource includes a time-domain resource and a frequency-domain resource.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the first terminal triggering a resource selection or a resource reselection, and the first terminal being configured with a full sensing or partial sensing capability in a higher layer, the transmission resource is determined from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource. The time-domain resource indicated by the transmission resource is located within a time-domain range indicated by the shared COT indication information.

In an embodiment, in response to receiving the shared COT indication information transmitted by the initiating terminal for the shared channel occupancy time (COT), whether the first terminal is the target terminal for the shared COT is determined; and the transmission resource is randomly selected from the candidate resources provided by the physical layer based on a number of selected frequency resources, and/or a PDB of to-be-transmitted data of a logical channel transmittable on a carrier, in response to determining that the first terminal is the target terminal for the shared COT, the first terminal triggering a resource selection or a resource reselection, the first terminal being configured with a full sensing or partial sensing capability in a higher layer, and failing to determine the transmission resource from the candidate resources provided by the physical layer based on the number of the selected frequency resources and/or the PDB of to-be-transmitted data of the logical channel transmittable on the carrier, and the time-domain information indicated by the shared COT indication information. The transmission resource includes a time-domain resource and a frequency-domain resource.

It should be noted that those skilled in the art may understand that the method provided in an embodiment of the present disclosure may be executed separately or together with some methods in the other embodiments of the present disclosure or in the related technologies.

As shown in FIG. 6, an embodiment provides a resource determination method. The method is executed by a first terminal in a sidelink (SL) communication, and includes the following steps.

In step 61, a transmission resource is determined from candidate resources provided by a physical layer based on time-domain information indicated by shared COT indication information, where the transmission resource includes a time-domain resource and a frequency-domain resource.

In an embodiment, whether the first terminal is a target terminal for a shared COT is determined; and in response to determining that the first terminal is the target terminal for the shared COT, the transmission resource is determined from the candidate resources provided by the physical layer based on the time-domain information indicated by the shared COT indication information. The transmission resource includes a time-domain resource and a frequency-domain resource.

In an embodiment, whether the first terminal is the target terminal for the shared COT is determined; and in response to determining that the first terminal is the target terminal for the shared COT, and the first terminal triggering a resource selection or a resource reselection, the transmission resource is determined from the candidate resources provided by the physical layer based on the time-domain information indicated by the shared COT indication information. The transmission resource includes a time-domain resource and a frequency-domain resource.

In an embodiment, in response to receiving the shared COT indication information transmitted by an initiating terminal for the shared channel occupancy time (COT), whether the first terminal is the target terminal for the shared COT is determined; and in response to determining that the first terminal is the target terminal for the shared COT, the transmission resource is determined from the candidate resources provided by the physical layer based on the time-domain information indicated by the shared COT indication information. The transmission resource includes a time-domain resource and a frequency-domain resource.

In an embodiment, whether the first terminal is the target terminal for the shared COT is determined; and in response to determining that the first terminal is the target terminal for the shared COT, and the first terminal being configured with a full sensing or partial sensing capability in a higher layer, the transmission resource is determined from the candidate resources provided by the physical layer based on the time-domain information indicated by the shared COT indication information. The transmission resource includes a time-domain resource and a frequency-domain resource.

For example, the first terminal has its own sensing result and receives the shared COT indication information. The first terminal selects a resource from the intersection of the time-domain information indicated by the shared COT indication information and the candidate resources provided by the physical layer. It should be noted that the first terminal having its own sensing result refers to the first terminal being configured with the full sensing or partial sensing capability in the higher layer.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, and the first terminal triggering a resource selection, and the first terminal being configured with a full sensing or partial sensing capability in a higher layer, the transmission resource is determined from the candidate resources provided by the physical layer based on the time-domain information indicated by the shared COT indication information. The transmission resource includes a time-domain resource and a frequency-domain resource.

In an embodiment, whether the first terminal is the target terminal for the shared COT is determined; and in response to determining that the first terminal is the target terminal for the shared COT, the transmission resource is determined from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource, and the time-domain resource indicated by the transmission resource is located within a time-domain range indicated by the shared COT indication information.

In an embodiment, whether the first terminal is the target terminal for the shared COT is determined; and in response to determining that the first terminal is the target terminal for the shared COT, the first terminal triggering a resource selection or a resource reselection, and the first terminal being configured with a full sensing or partial sensing capability in a higher layer, the transmission resource is determined from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource, and the time-domain resource indicated by the transmission resource is within a time-domain range indicated by the shared COT indication information.

It should be noted that the target transmitting terminal for the transmission resource may be the initiating terminal for the shared COT or another terminal (a destination address of an SL MAC PDU carried on the transmission resource may be a Layer-2 address of the initiating terminal for the shared COT or a Layer-2 address of the other terminal). For example, it may be limited that the target transmitting terminal for the transmission resource may only be the initiating terminal for the shared COT (the destination address of the SL MAC PDU carried on the transmission resource may only be the Layer-2 address of the initiating terminal for the shared COT).

In an embodiment, the first terminal selects a resource from the intersection of the candidate resources provided by the physical layer and the time-domain information indicated by the shared COT indication. The transmission resource needs to be selected within the activation time of the target transmitting terminal (if discontinuous reception (DRX) is configured) based on the number of selected frequency resources and the remaining PDB of the to-be-transmitted data of the logical channel transmittable on the carrier. The target transmitting terminal for the transmission resource may be the initiating terminal for the shared COT or another terminal (the destination address of the SL MAC PDU carried on the transmission resource may be the Layer-2 address of the initiating terminal for the shared COT or the Layer-2 address of the other terminal). For example, it may be limited that the target transmitting terminal for the transmission resource may only be the initiating terminal for the shared COT (the destination address of the SL MAC PDU carried on the transmission resource may only be the Layer-2 address of the initiating terminal for the shared COT).

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the transmission resource is determined from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource, and the time-domain resource indicated by the transmission resource is included in a time-domain range indicated by the shared COT indication information.

In an embodiment, whether the first terminal is the target terminal for the shared COT is determined; and in response to determining that the first terminal is the target terminal for the shared COT, the transmission resource is determined from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource, and the time-domain resource indicated by the transmission resource is included in a time-domain range indicated by the shared COT indication information.

In an embodiment, in response to receiving the shared COT indication information transmitted by the initiating terminal for the shared channel occupancy time (COT), whether the first terminal is the target terminal for the shared COT is determined; and in response to determining that the first terminal is the target terminal for the shared COT, the first terminal triggering a resource selection or a resource reselection, and first terminal being configured with a full sensing or partial sensing capability in a higher layer, the transmission resource is determined from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier. The transmission resource includes a time-domain resource and a frequency-domain resource, and the time-domain resource indicated by the transmission resource is within a time-domain range indicated by the shared COT indication information.

In an embodiment, the first terminal selects the transmission resource from the intersection of the time-domain information indicated by the shared COT indication information and the candidate resources provided by the physical layer, and then randomly selects a resource from the candidate resources provided by the physical layer.

In an embodiment, in response to receiving the shared COT indication information transmitted by the initiating terminal for the shared channel occupancy time (COT), whether the first terminal is the target terminal for the shared COT is determined; and the transmission resource is randomly selected from the candidate resources provided by the physical layer based on a number of selected frequency resources, and/or a PDB of to-be-transmitted data of a logical channel transmittable on a carrier, in response to determining that the first terminal is the target terminal for the shared COT, and failing to determine the transmission resource from the candidate resources provided by the physical layer based on the number of the selected frequency resources and/or the PDB of to-be-transmitted data of the logical channel transmittable on the carrier. The transmission resource includes a time-domain resource and a frequency-domain resource.

In an embodiment, in response to receiving the shared COT indication information transmitted by the initiating terminal for the shared channel occupancy time (COT), whether the first terminal is the target terminal for the shared COT is determined; the transmission resource is randomly selected from the candidate resources provided by the physical layer based on a number of selected frequency resources, and/or a PDB of to-be-transmitted data of a logical channel transmittable on a carrier, in response to determining that the first terminal is the target terminal for the shared COT, the first terminal triggering a resource selection or a resource reselection, the first terminal being configured with a full sensing or partial sensing capability in a higher layer, and failing to determine the transmission resource from the candidate resources provided by the physical layer based on the number of the selected frequency resources and/or the PDB of to-be-transmitted data of the logical channel transmittable on the carrier, and the time-domain information indicated by the shared COT indication information. The transmission resource includes a time-domain resource and a frequency-domain resource. It should be noted that the time-domain resource indicated by the transmission resource that cannot be determined from the candidate resources provided by the physical layer based on the time-domain information indicated by the shared COT indication information is within the time-domain range indicated by the shared COT indication information. The failing to determine (or select) the transmission resource is due to all resources within the time-domain range indicated by the shared COT indication information having been selected (or occupied).

In an embodiment, if there is no selectable resource from an intersection set of the candidate resources provided by the physical layer and the time-domain information indicated by the shared COT indication based on the number of selected frequency resources and the remaining PDB of the to-be-transmitted data of the logical channel transmittable on the carrier, the first terminal randomly selects a resource from the candidate resources provided by the physical layer based on the number of selected frequency resources and the remaining PDB of the to-be-transmitted data of the logical channel transmittable on the carrier. The target transmitting terminal for the transmission resource may be the initiating terminal for the shared COT or another terminal (a destination address of an SL MAC PDU carried on the transmission resource may be a Layer-2 address of the initiating terminal for the shared COT or a Layer-2 address of the other terminal). Optionally, the target transmitting terminal for the transmission resource may only be the initiating terminal for the shared COT (the destination address of the SL MAC PDU carried on the transmission resource may only be the Layer-2 address of the initiating terminal for the shared COT).

It should be noted that those skilled in the art may understand that the method provided in an embodiment of the present disclosure may be executed separately or together with some methods in the other embodiments of the present disclosure or in the related technologies.

As shown in FIG. 7, a resource determination apparatus is provided according to an embodiment of the present disclosure. The apparatus includes:
a determination module 71, configured to: determine whether a first terminal is a target terminal or a responding terminal of a shared channel occupancy time (COT), in response to receiving shared COT indication information transmitted by an initiating terminal for the shared COT; and determine a transmission resource for performing an SL transmission based on the shared COT indication information, in response to determining that the first terminal is the target terminal or the responding terminal for the shared COT.

It should be noted that those skilled in the art may understand that the method provided in an embodiment of the present disclosure may be executed separately or together with some methods in the other embodiments of the present disclosure or in the related technologies.

An embodiment of the present disclosure provides a communication device, which includes:
a processor; and
a memory, configured to store processor executable instructions,
where the processor is configured to implement the method applied to any of the embodiments of the present disclosure when executing executable instructions.

The processor may include various types of storage media. The storage medium is a non-transitory computer storage medium that can retain information stored on it after the communication device disconnects from power.

The processor may be connected to the memory via a bus or other means, and is configured to read an executable program stored on the memory.

An embodiment of the present disclosure further provides a computer storage medium. The computer storage medium stores a computer-executable program that, when executed by a processor, implements the method of any embodiment of the present disclosure.

Regarding the apparatus in the above embodiments, specific operations performed by each module have been described in detail in the embodiments related to the method, and will not be elaborated here.

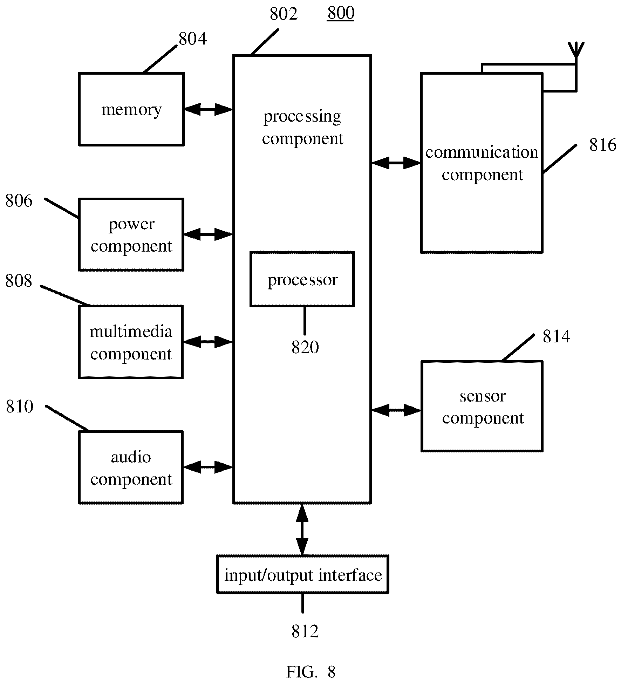

As shown in FIG. 8, an embodiment of the present disclosure provides a terminal structure.

Referring to FIG. 8, this embodiment provides a terminal 800. The terminal may specifically be a mobile phone, a computer, a digital broadcasting terminal, a messaging device, a game console, a tablet device, a medical device, a fitness device, a personal digital assistant, etc.

Referring to FIG. 8, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support operations of the terminal 800. Examples of such data include instructions for any application or method operating on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the terminal 800. The power component 806 may include a power management system, one or more power sources, and other components associated with generating, managing, and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense a boundary of a touch action or a slide operation, but also detect a duration and a pressure associated with the touch action or the slide operation. In some embodiments, the multimedia component 808 includes a front camera and/or a rear camera. When the terminal 800 is in an operation mode, such as a shooting mode or a video mode, the front camera and/or the rear camera may receive external multimedia data. Each of the front camera and the rear camera may be a fixed optical lens system or have focal length and optical zoom capabilities.

The audio component 810 is configured to output and/or input audio signals. For example, the audio component 810 includes a microphone (MIC) configured to receive external audio signals when the terminal 800 is in an operating mode such as a call mode, a recording mode, and a voice recognition mode. The received audio signal may be further stored in the memory 804 or transmitted via the communication component 816. In some embodiments, the audio component 810 also includes a speaker for outputting an audio signal.

The I/O interface 812 provides an interface between the processing component 802 and peripheral interface modules, which may be a keyboard, a click wheel, a button, etc. The button may include, but not limited to: a home button, a volume button, a start button, and a lock button.

The sensor component 814 includes one or more sensors for providing various aspects of state assessment for the terminal 800. For example, the sensor component 814 may detect a turned-on/turned-off status of the terminal 800, relative positioning of components such as a display and a keypad of the terminal 800. The sensor component 814 may also detect a change in a position of the terminal 800 or a component of the terminal 800, the presence or absence of user contact with the terminal 800, orientation or acceleration/deceleration of the terminal 800, and a change in temperature of the terminal 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on communication standards, such as Wi-Fi, 2G or 3G, or a combination thereof. In an exemplary embodiment, the communication component 816 receives a broadcast signal or broadcast related information from an external broadcast management system via a broadcast channel. In an exemplary embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an exemplary embodiment, the terminal 800 may be implemented by one or more of an application specific integrated circuit (ASIC), a digital signal processors (DSP), a digital signal processing device (DSPD), a programmable logic device (PLD), a field programmable gate array (FPGA), a controller, a microcontroller, a microprocessor, or other electronic components for performing the methods described above.

In an exemplary embodiment, a non-temporary computer-readable storage medium including instructions is further provided, such as a memory 804 including instructions. The instructions may be executed by the processor 820 of the terminal 800 to complete the above method. For example, the non-temporary computer-readable storage medium may include a ROM, a random access memory (RAM), a CD-ROM, a magnetic tape, a floppy disc, an optical data storage device, and the like.

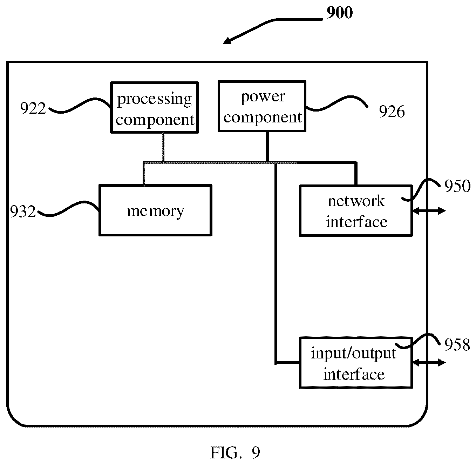

As shown in FIG. 9, an embodiment of the present disclosure illustrates a structure of a base station. For example, the base station 900 may be provided as a network side device. Referring to FIG. 9, the base station 900 includes the processing component 922, which further includes one or more processors, and memory resources represented by the memory 932 and configured to store instructions that can be executed by the processing component 922, such as an application program. The application program stored in the memory 932 may include one or more modules each corresponding to a set of instructions. In addition, the processing component 922 is configured to execute the instructions to perform any of the above methods applied to the base station.

The base station 900 may also include a power component 926 configured to perform power management for the base station 900, a wired or wireless network interface 950 configured to connect the base station 900 to the network, and an input/output (I/O) interface 958. The base station 900 may operate based on an operating system of the memory 932, such as Windows Server TM, Mac OS XTM, UnixTM, LinuxTM, FreeBSDTM, or the like.

After reading the specification and practicing the invention disclosed herein, those skilled in the art will easily come up with other embodiments of the present invention. This disclosure is intended to cover any variations, uses, or adaptations of the present invention that follow the general principles of the present invention and include common knowledge or customary technical means in the art that are not disclosed in this disclosure. The specification and embodiments are only considered exemplary, and the true scope and spirit of the invention are indicated by the following claims.

It should be appreciated that the present invention is not limited to the precise structure described above and shown in the accompanying drawings, and various modifications and changes can be made without departing from its scope. The scope of the present invention is limited only by the appended claims.

## Claims

1. A resource determination method, executed by a first terminal in a sidelink (SL) communication, comprising:
determining whether the first terminal is a target terminal for a shared channel occupancy time (COT), in response to receiving shared COT indication information transmitted by an initiating terminal for the shared COT; and
determining a transmission resource for performing an SL transmission based on the shared COT indication information, in response to determining that the first terminal is the target terminal for the shared COT.

2. The method according to claim 1, wherein determining the transmission resource for performing the SL transmission based on the shared COT indication information comprises:
determining the transmission resource for performing the SL transmission based on the shared COT indication information, in response to the first terminal triggering a resource selection or a resource reselection.

3. The method according to claim 1, wherein the shared COT indication information indicates at least one of:
a starting symbol, a starting slot, a starting subframe, or a starting frame of the shared COT;
an ending symbol, an ending slot, an ending subframe, or an ending frame of the shared COT;
a duration of the shared COT;
a starting symbol, a starting slot, a starting subframe, or a starting frame of a remaining COT of the shared COT;
an ending symbol, an ending slot, an ending subframe, or an ending frame of a remaining COT of the shared COT;
a remaining duration of the shared COT;
identification information of the initiating terminal for the shared COT;
identification information of the target terminal for the shared COT; or
channel access priority class (CAPC) information of the shared COT.

4. The method according to claim 1, wherein determining whether the first terminal is the target terminal for the shared COT comprises:
determining whether the first terminal is the target terminal for the shared COT based on a destination address and a service type of a data packet carrying the shared COT indication information, wherein the service type is a service type indicated by sidelink control information (SCI) carrying the shared COT indication information.

5. The method according to claim 4, wherein determining whether the first terminal is the target terminal for the shared COT based on the destination address and the service type of the data packet carrying the shared COT indication information comprises:
determining that the first terminal is the target terminal for the shared COT, in response to that the service type is a unicast service, and the destination address indicated by the sidelink control information (SCI) carrying the shared COT indication information is a Layer-2 address of the first terminal; or
determining that the first terminal is the target terminal for the shared COT, in response to that the service type is a multicast service, the destination address indicated by the SCI carrying the shared COT indication information is a Layer-2 address associated with the multicast service, and an identifier of the target terminal indicated by the shared COT indication information is the same as a terminal identifier of the first terminal; or
determining that the first terminal is the target terminal for the shared COT, in response to that the service type is a broadcast service, the destination address indicated by the SCI carrying the shared COT indication information is a Layer-2 address associated with the broadcast service, and an identifier of the target terminal indicated by the shared COT indication information is the same as a terminal identifier of the first terminal.

6. The method according to claim 1, wherein determining the transmission resource for performing the SL transmission based on the shared COT indication information comprises:
determining the transmission resource from candidate resources provided by a physical layer based on time-domain information indicated by the shared COT indication information, wherein the transmission resource comprises a time-domain resource and a frequency-domain resource.

7. The method according to claim 6, wherein determining the transmission resource from the candidate resources provided by the physical layer based on the time-domain information indicated by the shared COT indication information comprises:
determining the transmission resource from the candidate resources provided by the physical layer based on the time-domain information indicated by the shared COT indication information, in response to the first terminal being configured with a full sensing or partial sensing capability in a higher layer.

8. The method according to claim 6, wherein determining the transmission resource from the candidate resources provided by the physical layer based on the time-domain information indicated by the shared COT indication information comprises:
determining the transmission resource from the candidate resources provided by the physical layer based on the time-domain information indicated by the shared COT indication information, and at least one of an activation time of a target transmitting terminal, a number of selected frequency resources, or a remaining packet delay budget (PDB) of to-be-transmitted data of a logical channel transmittable on a carrier, wherein the time-domain resource indicated by the transmission resource is within a time-domain range indicated by the shared COT indication information.

9. The method according to claim 6, further comprising:
randomly selecting the transmission resource from the candidate resources provided by the physical layer based on a number of selected frequency resources, and/or a PDB of to-be-transmitted data of a logical channel transmittable on a carrier, in response to failing to determine the transmission resource from the candidate resources provided by the physical layer based on the number of the selected frequency resources and/or the PDB of to-be-transmitted data of the logical channel transmittable on the carrier, and the time-domain information indicated by the shared COT indication information.

10. The method according to claim 8 or 9, wherein the target transmitting terminal is the initiating terminal for the shared COT.

11. A resource determination apparatus, comprising:
a determination module, configured to: determine whether a first terminal is a target terminal or a responding terminal of a shared channel occupancy time (COT), in response to receiving shared COT indication information transmitted by an initiating terminal for the shared COT; and determine a transmission resource for performing an SL transmission based on the shared COT indication information, in response to determining that the first terminal is the target terminal or the responding terminal for the shared COT.

12. A communication device, comprising:
an antenna;
a memory; and
a processor, connected to the antenna and the memory, and configured to execute computer-executable instructions stored in the memory to control transmission and reception of the antenna and to implement the method according to any one of claims 1 to 10.

13. A computer storage medium, configured to store computer-executable instructions that, when executed by a processor, cause the method according to any one of claims 1 to 10 to be implemented.
